# EUROPÄISCHE PATENTSCHRIFT

(11) **EP 1 161 972 B1**
(45) Veröffentlichungstag und Bekanntmachung des Hinweises auf die Patenterteilung: **22.09.2004**
(21) Anmeldenummer: 01110943.6
(22) Anmeldetag: 05.05.2001
(51) Int. Cl.: A63C 9/00

(54) **Gleitbrett, insbesondere Ski sowie Profilschienen-System für ein solches Gleitbrett**
Glider, especially ski as well as a profile system for such a glider
Planche de glisse, notamment ski ainsi qu'un système de rails profilés pour une telle planche de glisse

(30) Priorität: 09.06.2000 DE 10028188; 21.11.2000 DE 10057904; 16.12.2000 DE 10062884
(43) Veröffentlichungstag der Anmeldung: 12.12.2001
(73) Patentinhaber: Völkl Sports GmbH & Co. KG, 94315 Straubing (DE)
(72) Erfinder: Scherübl, Franz, 94315 Straubing (DE); Allmann, Andreas, 9657 Unterwasser (CH)
(74) Vertreter: Graf, Helmut, Dipl.-Ing.

(56) Entgegenhaltungen:
- EP-A- 0 313 866
- EP-A- 0 758 557
- FR-A- 2 569 119
- US-A- 4 022 491

## Beschreibung

Die Erfindung bezieht sich auf Gleitbretter, insbesondere Ski oder Snowboards gemäß Oberbegriff Patentanspruch 1.

Es ist bei Skiern grundsätzlich bekannt, sogenannte Bindungsplatten, auf denen dann die eigentliche Skibindung montiert wird, am jeweiligen Ski unter Verwendung eines Profilschienensystems zu befestigen. Dieses besteht im wesentlichen aus zwei parallelen Profilschienen, die an der Skioberseite jeweils in Skilängsrichtung orientiert vorgesehen und mit Hilfe von Befestigungsschrauben befestigt sind.

Nachteilig hierbei ist, daß für die Befestigung der Profilschienen eine Vielzahl von Befestigungsschrauben notwendig sind, die in den Skikörper eingreifen. Dies bedeutet unter anderem eine aufwendige Montage und erfordert auch relativ große Querschnitte für die Profilschienen, um in diesen die für die Befestigungsschrauben notwendigen Befestigungsbohrungen unterbringen zu können. Weiterhin besteht die Gefahr, daß beim Festziehen der Befestigungsschrauben die Profilschienen im Bereich dieser Schrauben derart verformt werden, daß sich dort ein vergrößerter Querschnitt ergibt, der dann das Aufschieben der Bindungsplatten auf die Profilschienen erschwert oder verhindert.

Bekannt ist es weiterhin, bei einem Ski zur Befestigung der Bindungselemente, d. h. des Vorderbackens und des Fersensbackens der Bindung an der Skioberseite 2 in Skilängsrichtung gegeneinander versetzt und jeweils von einem C-Profil gebildete Grundplatten vorzusehen, die mit dem Ski verschraubt werden und die jeweils durch ihr C-Profil eine Führung bilden, in der die Bindung in Skilängsrichtung verstellbar ist. Die beiden Platten sind durch ihre C-Profilform aber starre Elemente, die die Flexibilität des Skis beeinträchtigen. Zur Verankerung der Grundplatte an der Oberseite des Skis ist es auch bekannt, an der Unterseite der jeweiligen Grundplatte eine kombinierte Kleb- und mechanische Rastverbindung vorzusehen, wodurch die Ausreißfestigkeit erhöht wird. Die Rastverbindung erfolgt durch Spreizdübel, die auf die Unterseite der Grundplatte geschweißt sind.

Aufgabe der Erfindung ist es, diese Nachteile zu vermeiden und ein Gleitbrett mit einem verbesserten Profilschienensystem aufzuzeigen. Zur Lösung dieser Aufgabe sind ein Gleitbrett entsprechend dem Patentanspruch 1.

Bei der Erfindung ist die wenigstens eine Profilschiene durch wenigstens einen zweiten, angeformten Profil- oder Dübelabschnitt durch eine Dübelverbindung fest mit dem Skikörper verbunden, und zwar auch durch zusätzliches Verkleben. Die Montage der Profilschienen erfolgt bevorzugt bereits bei der Herstellung bzw. beim Pressen der Gleitbretter. Die erfindungsgemäße Ausbildung hat eine Vielzahl von Vorteilen, die unter anderem darin bestehen, daß eine sehr präzise und homogene Verbindung zwischen den Profilschienen und den Gleitbrettkörpern erreicht wird, daß der Querschnitt jeder Profilschiene klein gehalten werden kann, was zu einer Reduzierung des Gewichtes und zu einer Verbesserung der Optik entscheidend beiträgt. Weiterhin wird eine optimale Funktion und Performance (direkte Kraftübertragung, optimaler Flexausgleich usw.) erreicht.

Weitere grundsätzliche Vorteile der Erfindung bestehen u.a. in einer optimalen technischen und optischen Integration des Systems Gleitbrett-Bindung oder - Bindungsplatte, hohe Flexibilität des Systems durch die Möglichkeit, unterschiedliche Bindungstypen oder Bindungsplatten, Bindungen usw. durch einfaches Aufschieben zu befestigen. Schließlich stellt die erfindungsgemäße Ausbildung eine auch für den Verwender transparente und glaubhafte Technologie dar.

Bei einer weiteren generellen Ausführung der Erfindung ist die Bindung des Gleitbrettes als voll funktionsfähige Einheit durch Aufschieben auf die wenigstens eine Profilschiene am Gleitbrett befestigt. Diese Ausbildung hat unter anderem den zusätzlichen Vorteil einer schnellen und einfachen Montage der Bindung oder der Bindungseinheit, und zwar durch einfaches Aufschieben und anschließendes Fixieren. Eine Schraubenbefestigung ist für die Montage der Bindung nicht mehr notwendig.

Weiterbildungen der Erfindung sind Gegenstand der Unteransprüche.

Die Erfindung wird im folgenden anhand der Figuren an Ausführungsbeispielen näher erläutert. Es zeigen:
- Fig. 1: in vereinfachter Darstellung und im Schnitt ein Schneegleitbrett in Form eines Skis mit einem an der Skioberseite vorgesehenen Profilschienensystem zum Befestigen unterschiedlicher Funktionselemente, beispielsweise Bindungsplatten, Bindungen, Bindungsanordnungen usw.;
- Fig. 2: in vereinfachter Teildarstellung eine Draufsicht auf den Ski der Figur 1;
- Fig. 3: einen Schnitt entsprechend der Linie I - I der Figur 1;
- Fig. 4: in Teildarstellung und in Seitenansicht den Ski der Figur 1, zusammen mit einer unmittelbar auf dem Schienensystem montierten Bindung;
- Fig. 5: in vergrößerter Teildarstellung einen Längsschnitt durch eine der Schienen bei einer weiteren Ausführungsform der Erfindung.

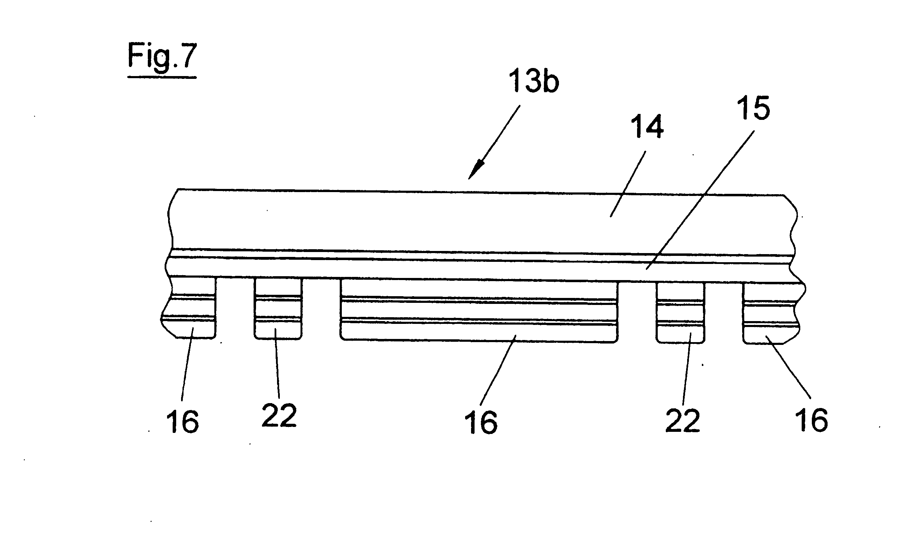

- Fig. 6 und 7: in Darstellungen ähnlich Figuren 1 und 3 eine weitere Ausführungsform der Erfindung.

In den Figuren ist 1 ein Ski, dessen Skikörper 2 den üblichen Aufbau aufweist, so unter anderem den von einem Torsionskasten 3 umschlossenen Kern 4, die die Skioberseite 5 und teilweise auch die Längsseiten des Skis 1 bildende Schale, welche mit ihren unteren Längsrändern jeweils bis an die Oberseite einer Seitenwange 7 reicht, das Laufflächenbauteil bestehend aus den beiden Stahlkanten 8 und der zwischen diesen angeordneten Lauffläche 9 sowie den darüber liegenden unteren Längsgurt 10. Die Schale 3 ist zumindest an der Skioberseite 5 aus einem geeigneten Material derart hergestellt, daß sie dort als oberer Längsgurt wirkt.

Der Skikörper 2 ist weiterhin so geformt, daß er zumindest im Bindungsbereich an der Oberseite 5 in der Mitte eine sich in Skilängsrichtung erstreckende muldenartige Vertiefung 11 bzw. beidseitig von dieser Vertiefung 11 jeweils einen sich in Skilängsrichtung erstreckenden erhabenen Bereich 12 aufweist, und zwar unmittelbar an die jeweilige Längsseite des Skis 1 anschließend. Auf jedem erhabenen Bereich 12 ist eine Profilschiene 13 befestigt, die sich in Skilängsrichtung erstreckt und aus einem geeigneten, hoch belastbaren Material, beispielsweise aus einem hoch belastbaren Kunststoff hergestellt ist. Die beiden Schienen 13 sind parallel zueinander und im Abstand voneinander angeordnet. Bei der dargestellten Ausführungsform ist jede Schiene 13 ferner im Querschnitt symmetrisch zu einer sich in Schienenlängsrichtung erstreckenden Mittelebene M ausgebildet.

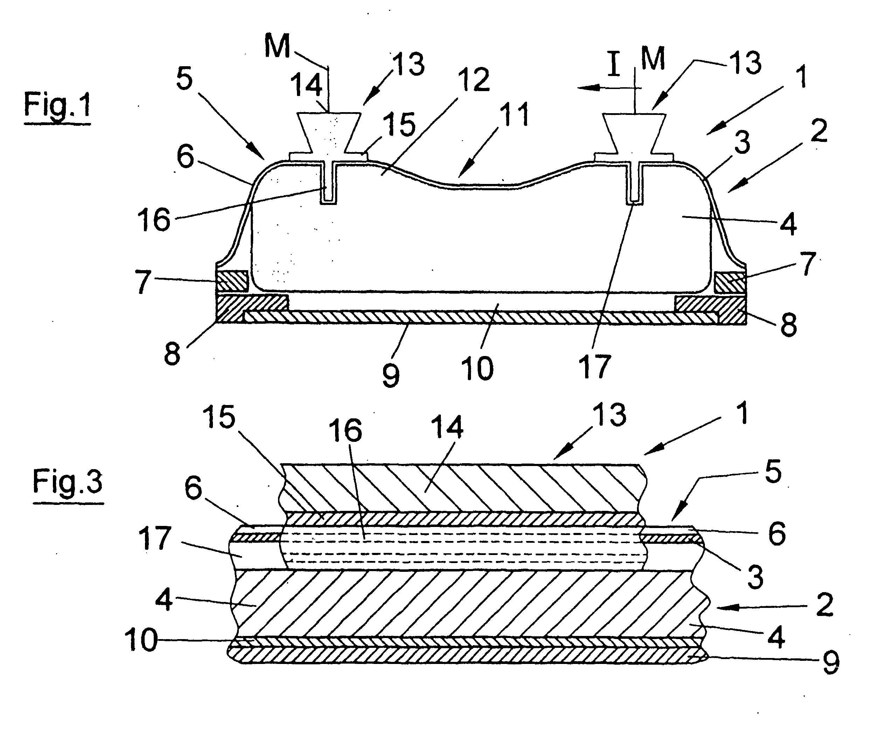

Wie insbesondere die Figur 1 zeigt, besitzt jede Schiene 13 einen oberen Profilabschnitt 14, der an seinen beiden Längsseiten Hinterschneidungen für eine formschlüssige Befestigung eines Funktionselementes bildet. Der Profilabschnitt weist hierfür bei der dargestellten Ausführungsform einen trapez- oder schwalbenschwanzförmigen Querschnitt auf, und zwar derart, daß die Breite des Profilabschnittes 14 mit zunehmendem Abstand von der freien Oberseite abnimmt. Der Profilabschnitt 14 geht in einen Profilabschnitt 15 über, der als flache Leiste ausgeführt ist, beidseitig über den Profilabschnitt 14 etwas vorsteht und mit seinen Oberflächenseiten in Ebenen senkrecht zur Mittelebene M liegt. An den Profilabschnitt 15 schließt sich ein stegartiger Profilabschnitt 16 an, der mit seinen Oberflächenseiten parallel zur Mittelebene M liegt und ein Dübelprofil bildet. Die Profilabschnitte 14, 15 und 16 erstrecken sich bei der dargestellten Ausführungsform jeweils über die gesamte Länge der jeweiligen Schiene 13.

Die Befestigung der jeweiligen Schiene 13 am Skikörper 2 erfolgt mittels einer Klebe-Dübel-Verbindung unter Verwendung des Profilabschnittes 16, der hierfür an seinen Oberflächenseiten auch mit einer die Verbindung bzw. Verankerung verbessernden Profilierung, beispielsweise mit einer widerhakenartig wirkenden Oberflächenprofilierung versehen ist und für die Befestigung der jeweiligen Schiene 13 in einen in den Skikörper 2 eingebrachten und an der Skioberseite 5 offenen Schlitz eingesetzt und dort auch durch Verkleben verankert ist.

Der Profilabschnitt 15 bildet mit seiner den Profilabschnitt 16 zugewandten Unterseite eine Anlagefläche, mit der die Schiene 13 gegen die Skioberseite 5 anliegt und die ferner unter anderem bei der Montage die Höhe, mit der die Schiene 13 über die Oberseite 5 vorsteht, genau definiert. Der Profilabschnitt 15 dient ferner auch als Anlagefläche für das an den Profilschienen 13 gehaltenen Funktionselement (beispielsweise Bindungsplatte mit Bindung oder Bindung) sowie als zusätzliche Abstützung, um Kräfte und Momente von dem Funktionselement großflächig auf die Skioberseite 5 zu übertragen.

Die beschriebene Dübelbefestigung der Schienen 13 durch den angeformten Profilabschnitt 16 hat zahlreiche Vorteile, speziell auch gegenüber einer Schraubenbefestigung. Zunächst wird eine Befestigung auf großer Länge erreicht. Die jeweilige Schiene 13 kann im Querschnitt sehr klein gehalten werden, speziell auch der Profilabschnitt 14, da die Schiene und insbesondere auch den Profi labschnitt 14 durchdringende Befestigungsschrauben, die den Querschnitt zwangsläufig vergrößern würden, entfallen. Weiterhin sind auch unerwünschte Verformungen der Schienen 13 und dabei insbesondere der Profilabschnitte 14 vermieden, wie sie beispielsweise bei einer Schraubenbefestigung beim Festziehen der Befestigungsschrauben unvermeidbar sind. Ein weiterer, entscheidender Vorteil besteht auch darin, daß die Verankerung der jeweiligen Schiene 13 über den Profilabschnitt 16 in einem Bereich des Kernes 4 erfolgt, der durch den benachbarten Torsionskasten 3 sowie durch die zumindest an der Skioberseite 5 besonders feste Schale 6 so verstärkt ist, daß er hohe Kräfte, insbesondere auch hohe Zugkräfte aufnehmen kann und somit eine sichere Verankerung der jeweiligen Profilschiene 13 ermöglicht. Insgesamt wird durch die erfindungsgemäße Ausbildung eine sehr präzise und homogene Verbindung zwischen der jeweiligen Schiene 13 und dem Skikörper 2 erreicht, die (Verbindung) zur Aufnahme hoher Kräfte geeignet ist.

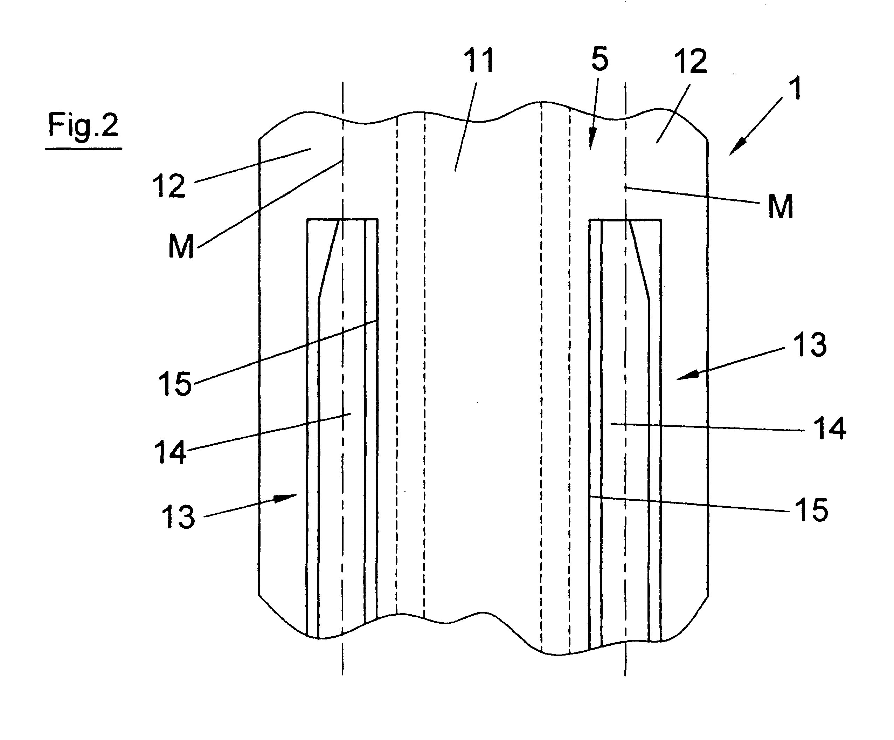

Zumindest an einem Ende sind die Schienen 13 bzw. deren Profilabschnitte 14 derart abgeschrägt, daß ein besonders einfaches Einführen und Aufschieben des jeweiligen Funktionselementes auf die Schienen 13 in einfacher Weise möglich ist. Diese Abschrägung ist in der Figur 2 mit 14' angedeutet.

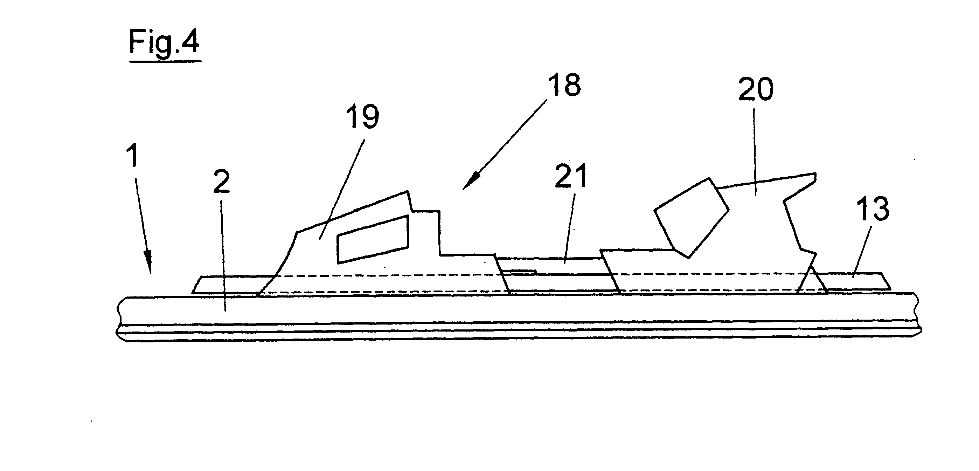

Die Figur 4 zeigt eine Bindung 18, die im wesentlichen aus dem vorderen Bindungselement 19, aus dem rückwärtigen Bindungselement 20 und einer Bindungsplatte 21 besteht, die bei der dargestellten Ausführungsform die Bindungselemente 19 und 20 verbindet oder auf der die Bindungselemente 19 und 20 vorgesehen sind, und zwar in jedem Fall derart, daß eine Größeneinstellung bzw. Solenlängenanpassung, d.h. eine Einstellung des Abstandes zwischen dem vorderen Bindungselement 19 und dem hinteren Bindungselement 20 möglich ist. Im Bereich der Bindungselemente 19 und 20 weist die Bindung 18 an der Unterseite Befestigungsnuten auf, deren Querschnitt dem Querschnitt des Profilabschnittes 14 der Schienen 13 derart angepaßt ist, daß die Bindung 18 mit diesen Befestigungsnuten formschlüssig auf die Schienen 13 aufgeschoben werden kann und dann an diesen Schienen auch formschlüssig gehalten ist. Für die Montage der Bindung 18 am Ski 1, der bereits bei seiner Fertigung mit den Schienen 13 versehen ist, ist es also nur noch notwendig, die Bindung 18 auf die Schienen 13 aufzuschieben und gegen ein unerwünschtes Längsverschieben in geeigneter Weise zu fixieren, beispielsweise durch Verklemmen an den Schienen 13 und/oder durch Einbringen wenigsten einer Sicherungsschraube in den Skikörper 2 usw.

Hierbei ist dann insbesondere die Befestigung der Bindungsplatte 21 nur an einem Punkt bzw. an einem Bereich, beispielsweise in der Mitte der Bindungsplatte an den Schienen 13 vorzusehen, so daß beim Biegen des Skis 1 eine Relativbewegung zwischen Bindungsplatte 20 und dem Ski durch Gleiten der Bindungsplatte 21 an den Schienen 13 in Schienenlängsrichtung möglich ist.

Bei der in der Figur 4 dargestellten Bindung 18 sind die mit den Schienen 13 zusammenwirkenden Befestigungsnuten jeweils an Teilen des vorderen Bindungselementes 19 bzw. des rückwärtigen Bindungselementes 20 vorgesehen, während die Bindungsplatte 20 lediglich die Standfläche für den Skistiefel bildet und die beiden Bindungselemente 19 und 20 mit Abstand verbindet.

Grundsätzlich besteht auch die Möglichkeit, die Bindungsplatte 21 so auszubilden, daß sie mit dem Querschnittsprofil der Profilabschnitte 14 entsprechenden Nuten durch Aufschieben an diesen Schienen gehalten ist und die Bindungselemente 19 und 20 dann an der Oberseite der Platte in geeigneter Weise befestigt sind.

Vorstehend wurde davon ausgegangen, daß der Profilabschnitt 16 kontinuierlich über die gesamte Länge der Schiene 13 ausgebildet ist. Grundsätzlich besteht auch die Möglichkeit, den Profilabschnitt 16 mehrfach unterbrochen auszubilden, d.h. beispielsweise bestehend aus mehreren Einzel-Dübelabschnitten, die in Schienenlängsrichtung aufeinander folgen.

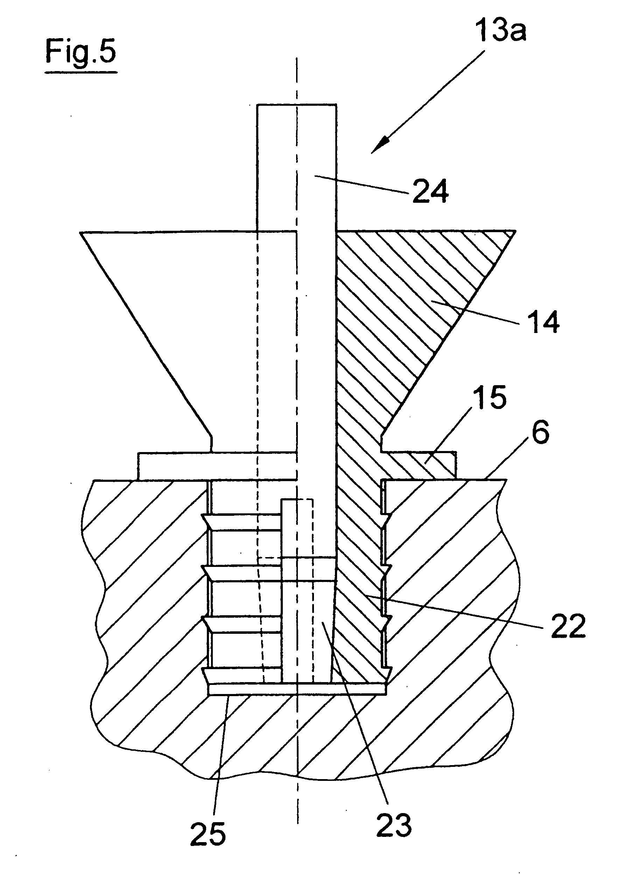

Die Figur 5 zeigt in einer vergrößerten Schnittdarstellung eine Schiene 3a, die hinsichtlich ihrer Funktion der Schiene 13 entspricht und mit einer weiteren Schiene 13a das Profilschienensystem zur Befestigung von nicht dargestellten Funktionenelementen einer Bindung oder zur Befestigung einer Bindungsplatte bildet. Die Schiene 13a besteht wiederum aus den Profilabschnitten 14 und 15. Zur Befestigung der Schiene 13a am Skikörper 2 sind in Längsrichtung der Schiene 13a aufeinander folgend mehrere als Spreizdübel ausgebildete Zapfen 22 angeformt, die bei der dargestellten Ausführungsform geschlitzt sind und eine sich zum freien Ende des jeweiligen Zapfens 22 hin verengende Bohrung 23 aufweisen, die auch an der Oberseite des Profilabschnittes 14 offen ist. Mit 24 ist ein Stift bezeichnet, der in der jeweiligen Bohrung 23 vormontiert oder über wenigstens eine Sollbruchstelle mit angespritzt ist. Nach dem Anbringen der Schiene 13a am Skikörper 2, d.h. nach dem Einsetzen der Zapfen 22 in am Skikörper passend vorgesehene Bohrungen 25 werden die einzelnen Bolzen 24 dann in den verengenden Teil der Bohrungen 23 unter Spreizen der Zapfen 22 eingedrückt oder eingeschlagen.

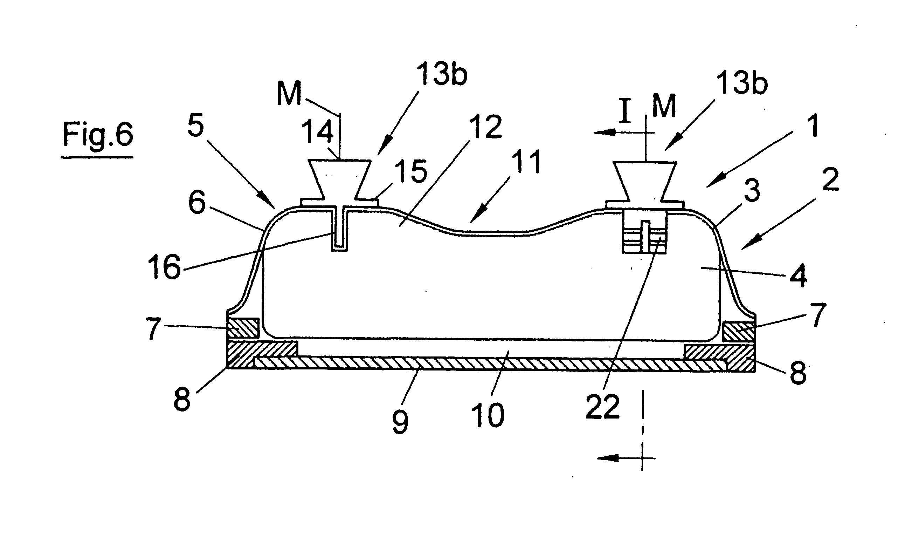

Wie die Figuren 5 und 6 zeigen, besteht hier auch die Möglichkeit, die Spreizzapfen und die leistenförmigen oder stegartigen Profilabschnitte 16 kombiniert vorzusehen, und zwar in Längsrichtung der Profilschiene 13b aufeinander folgend, wobei der Anfang und das Ende jedes Profilabschnittes 14 von dem benachbarten Zapfen 22 beabstandet ist. Durch diese Kombination wird zusätzlich zu der Spreizdübelbefestigung durch die Zapfen 22 auch noch die Verankerung und insbesondere auch die Übertragung von quer zur Profilschiene 13b wirkenden seitlichen Kräften auf großer Länge über die stegartigen Profilabschnitte 16 erreicht.

Das Schienensystem wurde voranstehend bei einem Ski beschrieben. Selbstverständlich kann dieses System auch bei anderen Gleitbrettern, beispielsweise bei Snowboards, zur Anwendung kommen, um dort an der jeweiligen Oberseite Funktionselemente, beispielsweise Bindungen, Bindungsplatten usw. zu befestigen.

Die Erfindung wurde voranstehend an Ausführungsbeispielen erläutert. Es versteht sich, daß zahlreiche Änderungen sowie Abwandlungen möglich sind, ohne daß dadurch der der Erfindung zugrundeliegende Erfindungsgedanke verlassen wird.

### Bezugszeichenliste

- 1: Ski
- 2: Skikörper
- 3: Torsionskasten
- 4: Skikern
- 5: Skioberseite
- 6: Schale
- 7: Seitenwange
- 8: Stahlkante
- 9: Laufbelag
- 10: untere Längsgurtung
- 11: Vertiefung
- 12: erhabener Bereich
- 13, 13a, 13b: Schiene
- 14, 15, 16: Profilabschnitt
- 17: Befestigungsschlitz
- 18: Bindung
- 19, 20: Bindungselement
- 21: Bindungsplatte
- 22: Spreizzapfen oder -dübel
- 23: Bohrung
- 24: Spreizbolzen
- 25: Bohrung
- M: Mittelebene

## Patentansprüche

1. Gleitbrett, insbesondere Ski oder Snowboard, mit einem an der Gleitbrettoberseite (5) zumindest im Bindungsbereich vorgesehenen Profil-System mit zwei sich in Gleitbrettlängsrichtung erstreckenden getrennten Profilen (13) zum Befestigen von Funktionselementen (18, 19, 20, 21) an der Gleitbrettoberseite durch Aufschieben, **dadurch gekennzeichnet, daß** die Profile Profilschienen (13, 13a, 13b) sind, die parallel zueinander und senkrecht zur ihrer Längsachse von einander beabstandet über jeweils eigene angeformte Dübel oder Dübelabschnitte (16, 22) durch eine Dübelverbindung oderverankerung mit dem Gleitbrettkörper (2) verbunden sind, und daß die Funktionselemente (18, 19, 20, 21) jeweils an beiden Profilschienen gehalten sind.

2. Gleitbrett nach Anspruch 1, **dadurch gekennzeichnet, daß** die Befestigung der Profilschienen (13a, 13b) mit dem Gleitbrettkörper (2) über eine Spreizdübelverbindung und/oder eine Dübel-Klebe-Verbindung erfolgt.

3. Gleitbrett nach Anspruch 1 oder 2, **dadurch gekennzeichnet, daß** das Funktionselement eine Bindung (18, 19, 20) oder eine Bindungsplatte (21) für eine Bindung ist.

4. Gleitbrett nach einem der vorhergehenden Ansprüche, **dadurch gekennzeichnet, daß** die wenigstens eine Profilschiene (13, 13a, 13b) an einem erhöhten Bereich (12) des Gleitbrettkörpers (2) befestigt ist.

5. Gleitbrett nach einem der vorhergehenden Ansprüche, **dadurch gekennzeichnet, daß** die Gleitbrettoberseite (5) zwischen diesen Profilschienen eine sich in Profilschienenlängsrichtung erstreckende Vertiefung (11) aufweist.

6. Gleitbrett nach einem der vorhergehenden Ansprüche, **dadurch gekennzeichnet, daß** die Profilschienen aus Metall oder Kunststoff gefertigt sind.

7. Gleitbrett nach Anspruch 3, **dadurch gekennzeichnet, daß** die Bindung (18) ein vorderes Bindungselement (19) sowie ein rückwärtiges Bindungselement (20) aufweist, die über ein weiteres Bindungselement, beispielsweise eine Bindungsplatte (21) zu einer funktionsfähigen Einheit verbunden sind, und
daß die Bindung als voll funktionsfähige Einheit an der wenigstens einen Profilschiene (13, 13a, 13b) durch Aufschieben an der Gleitbrettoberseite (5) befestigt ist.

8. Gleitbrett nach einem der vorhergehenden Ansprüche, **dadurch gekennzeichnet, daß** die jeweilige Profilschiene (13, 13a, 13b) einen ersten Profilabschnitt (14) aufweist, der einen wenigstens eine Hinterschneidung bildenden Querschnitt, beispielsweise einen Schwalbenschwanzquerschnitt besitzt und an dem das jeweilige Funktionselement nach dem Aufschieben formschlüssig gehalten ist, sowie wenigstens einen weiteren, die Dübel (22) und/oder Dübelelemente (16) bildenden Profilabschnitt besitzt und mit diesem Profilabschnitt einstückig hergestellt ist.

9. Gleitbrett nach Anspruch 8, **dadurch gekennzeichnet, daß** die jeweilige Profilschiene (13, 13a, 13b) zwischen dem ersten beispielsweise einen Schwalbenschwanzquerschnitt aufweisenden Profilabschnitt (14) und dem wenigstens einen Dübel (22) und/oder dem weiteren Profilabschnitt (16) einen dritten Profilabschnitt (15) aufweist, der eine Anlage- oder Abstützfläche der Profilschiene (13, 13a, 13b) an der Oberseite und/oder eine Anlagefläche für das jeweilige Funktionselement bildet.

10. Gleitbrett nach einem der vorhergehenden Ansprüche, **dadurch gekennzeichnet, daß** der zweite Profilabschnitt (16) durchgehend ausgebildet ist.

11. Gleitbrett nach einem der vorhergehenden Ansprüche, **dadurch gekennzeichnet, daß** in Profilschienenlängsrichtung eine Vielzahl von zweiten Profilabschnitten aufeinander folgend vorgesehen sind.

12. Gleitbrett nach einem der vorhergehenden Ansprüche, **dadurch gekennzeichnet, daß** die Bindungsplatte (21) nur an einem Bereich, beispielsweise an einem Bereich zwischen ihren beiden Enden an wenigstens einer der Profilschienen (13, 13a, 13b) gegen Längsverschieben gesichert ist.

## Claims

1. Sliding board, in particular a ski or snowboard, with a profile system which is provided on the upper face (5) of the board at least in the area of the bindings, and which has two separate profiles (13) extending in the longitudinal direction of the sliding board, for fastening functional elements (18, 19, 20, 21) on the upper face of the board by means of pushing on,
**characterised in that**
the profiles are profile rails (13, 13a, 13b) which are connected to the body (2) of the sliding board, parallel to one another and perpendicular to their longitudinal axis, respectively via own dowels or dowel sections (16, 22) that have been moulded on, via a dowel connection or dowel anchor; and that the functional elements (18, 19, 20, 21) are respectively held on both profile rails.

2. Sliding board in accordance with claim 1, **characterised in that** the profile rails (13a, 13b) are fastened to the body (2) of the sliding board by means of a straddling dowel connection and/or a dowel/adhesive connection.

3. Sliding board in accordance with claim 1 or 2, **characterised in that** the function element is a binding (18, 19, 20) or a binding plate (21) for a binding.

4. Sliding board in accordance with one of the preceding claims, **characterised in that** the at least one profile rail (13a, 13b) is fastened to a raised area (12) of the body (2) of the sliding board.

5. Sliding board in accordance with one of the preceding claims, **characterised in that** the upper face (5) of the sliding board has a depression (11) between these profile rails which extends in the longitudinal direction of the profile rails.

6. Sliding board in accordance with one of the preceding claims, **characterised in that** the profile rails are manufactured from metal or plastic.

7. Sliding board in accordance with claim 3, **characterised in that** the binding (18) has a front binding element (19) as well as a rear binding element (20), which are connected to form a functional unit via a further binding element, for example a binding plate (21), and
that the binding is fastened, as a fully functional unit, onto the at least one profile rail (13, 13a, 13b) by being pushed onto the upper face (5) of the sliding board.

8. Sliding board in accordance with one of the preceding claims, **characterised in that** the respective profile rail (13, 13a, 13b) has a first profile section (14) which has a cross-section that forms at least one undercut, for example a dovetail cross-section, and on which the respective functional element is held in a form-fitting manner after having been pushed on, and also has at least one further profile section which forms the dowels (22) and/or dowel elements (16), and is manufactured in one piece with this profile section.

9. Sliding board in accordance with claim 8, **characterised in that** the respective profile rail (13, 13a, 13b) has a third profile section (15) between the first profile section (14), that has for example a dovetail cross-section, and the at least one dowel (22) and/or the further profile section (16), which [third profile section] forms a bearing surface or support face of the profile rail (13, 13a, 13b) on the upper face, and/or forms a bearing surface for the respective functional element.

10. Sliding board in accordance with one of the preceding claims, **characterised in that** the second profile section (16) is designed in a continuous manner.

11. Sliding board in accordance with one of the preceding claims, **characterised in that** provided in the longitudinal direction of the profile rail are numerous second profile sections, one after the other.

12. Sliding board in accordance with one of the preceding claims, **characterised in that** the binding plate (21) is secured against longitudinal displacement only at one area, for example at an area between its two ends, on at least one of the profile rails (13, 13a, 13b).

## Revendications

1. Planche de glisse, notamment ski ou snowboard, avec un système de profilé prévu contre la face supérieure de la planche de glisse (5), au moins dans la zone de raccordement, ledit système étant doté de deux profilés (13) séparés s'étendant dans la direction longitudinale de la planche de glisse et destinés à fixer des éléments fonctionnels (18, 19, 2à, 2&) contre la face supérieure de la planche de glisse, par glissement, et
**caractérisée en ce que** les profilés sont des rails profilés (13, 13a, 13b) parallèles les uns aux autres, écartés les uns des autres, perpendiculairement par rapport à leur axe longitudinal, par l'intermédiaire de chevilles ou segments de chevilles (16, 22) formés, et raccordés au corps de la planche de glisse (2) par l'intermédiaire d'une liaison ou ancrage à cheville, et **en ce que** les éléments fonctionnels (18, 19, 20, 21) sont systématiquement retenus aux deux rails profilés.

2. Planche de glisse selon la revendication 1, **caractérisée en ce que** la fixation des rails profilés (13a, 13b) au corps de la planche de glisse (2) est assurée via une liaison à cheville extensible et / ou une liaison à collage de cheville.

3. Planche de glisse selon la revendication 1 ou 2, **caractérisé en ce que** l'élément fonctionnel est un liaison ou une plaque de liaison (21) pour une liaison.

4. Planche de glisse selon une des revendications précédentes, **caractérisée en ce qu'**au moins un rail profilé (13, 13a, 13b) a été fixé à un segment surélevé (12) du corps de la planche de glisse (2).

5. Planche de glisse selon une des revendications précédentes, **caractérisée en ce que** la face supérieure de la planche de glisse (5) présente, entre ces deux rails profilés, un enfoncement (11) s'étendant dans la direction longitudinale du rail profilé.

6. Planche de glisse selon une des revendications précédentes, **caractérisée en ce que** les rails profilés sont en métal ou plastique.

7. Planche à glisse selon la revendication 6, **caractérisée en ce que** la liaison (18) présente un élément de liaison antérieur (19) et postérieur (20) raccordés à une unité fonctionnelle via un élément de liaison supplémentaire, comme une plaque de raccordement (21) et
**en ce que** la liaison a été fixée comme unité presque entièrement fonctionnelle à au moins un rail profilé (13, 13a, 13b), par glissement sur la face supérieure de la planche de glisse (5).

8. Planche de glisse selon une des revendications précédentes, **caractérisée en ce que** le rail profilé respectif présente un premier segment profilé (14) possédant au moins une section transversale formant une contre-dépouille, comme une section transversale en forme de queue d'aronde, et contre lequel l'élément fonctionnel respectif est maintenu avec adhérence après le glissement, possédant au moins un segment profilé supplémentaire formant la cheville et / ou les éléments de cheville (16) et fabriqué d'une seule pièce avec ce segment profilé.

9. Planche de glisse selon la revendication 8, **caractérisée en ce que** le rail profilé respectif (13, 13a, 13b) présente, entre le premier segment profilé (14) présentant par exemple une section transversale en forme de queue d'aronde et au moins une cheville (22) et/ou le segment profilé supplémentaire (16), un troisième segment profilé (15) constituant une surface d'applique ou de soutien du rail profilé (13, 13a, 13b) contre la face supérieure et / ou une surface d'applique pour l'élément fonctionnel respectif.

10. Planche de glisse selon une des revendications précédentes, **caractérisé en ce que** le deuxième segment profilé (16) se présente de façon continue.

11. Planche de glisse selon une des revendications précédentes, **caractérisée en ce que** de nombreux segments profilés secondaires ont été prévus dans la direction longitudinale des rails profilés, les uns derrière les autres.

12. Planche de glisse selon une des revendications précédentes, **caractérisée en ce que** la plaque de raccordement (21) est, contre par exemple une zone située entre ses deux extrémités, à au moins un des rails profilés (13, 13a, 13b), pour éviter le glissement longitudinal.
